# EUROPÄISCHE PATENTSCHRIFT

(11) **EP 2 142 272 B1**
(45) Veröffentlichungstag und Bekanntmachung des Hinweises auf die Patenterteilung: **27.06.2012**
(21) Anmeldenummer: 08734959.3
(22) Anmeldetag: 02.04.2008
(51) Int. Cl.: B01D 21/00, B01D 21/24, B03D 1/24

(54) **FLOTATIONSVORRICHTUNG MIT LOCHPLATTE**
FLOTATION APPARATUS WITH PLATE CONTAINING HOLES
DISPOSITIF DE FLOTTATION DOTÉ D'UNE PLAQUE PERFORÉE

(30) Priorität: 27.04.2007 DE 102007020029
(43) Veröffentlichungstag der Anmeldung: 13.01.2010
(73) Patentinhaber: Meri Entsorgungstechnik für die Papierindustrie GmbH, 81673 München (DE)
(72) Erfinder: TROUBOUNIS, George, 80331 München (DE); MENKE, Lucas, 81545 München (DE)
(74) Vertreter: Manitz, Finsterwald & Partner GbR
(86) Internationale Anmeldenummer: PCT/EP2008/002613
(87) Internationale Veröffentlichungsnummer: WO 2008/135124

(56) Entgegenhaltungen:
- WO-A-84/01724
- US-A- 3 221 889
- US-A- 4 194 976

## Beschreibung

Die vorliegende Erfindung betrifft eine Flotationsvorrichtung zur Abtrennung von Feststoffpartikeln aus einer Suspension unter Bildung einer an Feststoffpartikeln armen Fraktion und einer an Feststoffpartikeln reichen Fraktion, welche einen Behälter mit einem Einlass für die Suspension, mit einem Auslass für die an Feststoffpartikeln arme Fraktion, mit einem Auslass für die an Feststoffpartikeln reiche Fraktion sowie mit wenigstens einem aus mehreren übereinander angeordneten Lamellen zusammengesetzten Lamellenblock, umfasst. Des Weiteren betrifft die vorliegende Erfindung ein Verfahren zur Abtrennung von Feststoffpartikeln aus einer Suspension unter Bildung einer an Feststoffpartikeln armen Fraktion und einer an Feststoffpartikeln reichen Fraktion.

Bei der Flotation handelt es sich um ein physikalisches Trennverfahren zur Abtrennung von Feststoffen aus einer wässrigen Suspension mit Hilfe von Gasblasen, bei dem die unterschiedliche Grenzflächenspannung von Feststoffen gegenüber Flüssigkeit, zumeist Wasser, und Gasen, zumeist Luft, ausgenutzt wird. Neben disperser, selektiver Flotation ist auch die Druckentspannungsflotation bekannt. Während bei der erstgenannten Variante vergleichsweise große Gasblasen in die Flüssigkeit eingebracht werden, so dass mehrere kleinere Partikel an einer Gasblase anhaften, werden bei der letztgenannten Verfahrensvariante vergleichsweise kleine Gasbläschen in die Flüssigkeit eingebracht, so dass mehrere kleine Gasbläschen an einem Partikel anhaften.

Eine Flotation wird beispielsweise zur Trennung feinkörniger Feststoffgemenge, u.a. von Erzen und Gangart, in einer wässrigen Suspension eingesetzt, wobei durch einen Schnellrührer oder Lanzen Luft in das Flotationsbad eingetragen und fein verteilt wird. Dabei stabilisieren in dem Flotationsbad enthaltene Tenside und Schaumstabilisatoren die Luftblasen. Eine Sorte Partikel lässt sich schlecht mit Wasser benetzen und haftet daher an den Luftblasen. Diese Partikel schwimmen mit den Luftblasen auf und können mit dem Schaum abgeschöpft werden. Die übrigen Partikel sollen in der Trübe verbleiben und werden am Ende des Flotationsprozesses abgepumpt.

Auch bei der Papierherstellung aus Altpapier wird ein Wasser-Altpapier-Gemisch flotiert, um die Druckfarben zu entfernen. Ebenso dient das Flotationsverfahren zur Reinigung von Abwasser in Kläranlagen, um feine Schmutzpartikel und Schwebstoffe zu binden. In der Medizin werden Flotationsverfahren zum Nachweis von Parasiteneiern im Kot benutzt.

Herkömmliche Flotationsvorrichtungen zur Durchführung einer Druckentspannungsflotation umfassen einen Behälter, in den die zu behandelnde, mit Luft gesättigte Flüssigkeit durch eine Zuleitung eingeführt wird. Beim Eintreten in den Behälter erfährt die mit Luft gesättigte Flüssigkeit eine Druckverringerung, weswegen in dem Behälter Luftbläschen mit einer Größe von wenigen Mikrometern entstehen. Diese Luftbläschen haften an den in der Flüssigkeit suspendierten Teilchen und bilden mit diesen schwimmfähige Flocken, so dass auf der Oberfläche der Flüssigkeit eine schwimmende Schlammschicht entsteht, welche mit einer Abstreifeinrichtung mechanisch aus der Flüssigkeit abgestreift und aus dem Behälter entfernt wird. Die verbleibende, von Feststoffpartikeln zumindest weitgehend befreite Flüssigkeit wird über einen oder mehrere Auslässe als Klarwasser abgezogen. Um die Wirksamkeit der Flotationsvorrichtung zu erhöhen, ist es üblich, in dem Flotationsbehälter eine Anzahl von, bezogen auf die Behälterachse, schräg verlaufenden Lamellen, welche als Prallbleche fungieren, vorzusehen, wodurch die Oberflächenseparation der Flotationsvorrichtung erhöht wird und das Verhältnis von Fluss zu Oberfläche erhöht wird, wodurch die Abscheidung der Feststoffpartikel begünstigt wird.

Aus der EP 0 814 885 B 1 ist eine Flotationsvorrichtung bekannt, welche einen senkrecht angeordneten Behälter umfasst, der neben einer Zuführeinrichtung für Suspension, einer Injektionseinrichtung zum Einleiten von Gas, einem Flüssigkeitsauslass und einer Abstreifeinrichtung mehrere schräg angeordnete Lamellen aufweist.

In der EP 1 193 342 A1 wird eine Flotationsvorrichtung zur Trennung von Stoffen oder Stoffgemischen aus Suspensionen zur Bildung mindestens einer stoffreichen und stoffarmen Fraktion offenbart, welche einen säulenartigen Separationsbehälter aufweist, der unten einen Suspensionseinlass sowie mehrere übereinander angeordnete schräg angeordnete Lamellen, einen ersten Ausgang für die stoffarme Fraktion sowie einen im oberen Bereich angeordneten zweiten Ausgang für die stoffreiche Fraktion umfasst, wobei der Suspensionseinlass eine mittige, vertikal gerichtete Hauptströmung bewirkt, wobei die Lamellen radial außerhalb der Hauptströmung angeordnet sind und für die stoffarme Fraktion eine nach außen und schräg unten gerichtete Strömung bewirken, und radial außerhalb der Lamellen ein ringartiger Sammelkanal für die stoffarme Fraktion ausgebildet ist. Durch die Anordnung der Vertikalströmung nach radial oben und die Anordnung der Lamellen radial außerhalb der Hauptströmung soll die Strömung der stoffarmen Fraktion nach radial außen gerichtet sein und sich damit zunehmend verlangsamen, was eine bessere Abtrennung der Partikel bewirken soll. Ein weiterer Vorteil soll darin bestehen, dass die stoffarme Fraktion am Außenumfang des Behälters, also hinter den stromabwärtigen Kanten der Lamellen, gesammelt wird, wodurch mit geringem Platzbedarf weitere Trennstufen vorgesehen werden können, sei es als weitere Flotationsstufen oder als Filtrationsstufen. Durch eine gezielte kaskadenartige Aufeinanderfolge mehrerer Trennstufen, insbesondere von Flotationsstufen unterschiedlicher Prinzipien, sollen mehrere Fraktionen unterschiedlicher Stoffgehalte erzeugt werden können.

Ein Nachteil der vorgenannten Flotationsvorrichtungen besteht jedoch darin, dass, bezogen auf die Höhe des Flotationsbehälters, kein gleichmäßiger Abzug von Flüssigkeit über die Lamellen stattfindet. Vielmehr wird in dem Flotationsbehälter u.a. aufgrund des über die Höhe des Flotationsbehälters variierenden hydrostatischen Drucks Klarwasser vornehmlich über die unteren Lamellen abgezogen, wohingegen der Klarwasserabzug über die oberen Lamellen in einem signifikant geringen Ausmaß stattfindet. Da der Reinigungsgrad des über die Lamellen geführten und abgezogenen Klarwassers umso geringer ist, desto größer das pro Zeiteinheit durch die Lamellen geführte Flüssigkeitsvolumen ist, weist das über die unteren Lamellen abgezogene Klarwasser eine niedrige Reinheit in Bezug auf Feststoffpartikel auf als das über die oberen Lamellen abgezogene Klarwasser. Deshalb kann die maximale Reinigungskapazität der Flotationsvorrichtung nicht erreicht werden.

Aufgabe der vorliegenden Erfindung ist daher die Bereitstellung einer Flotationsvorrichtung zur Abtrennung von Feststoffpartikeln aus einer Suspension unter Bildung einer an Feststoffpartikeln armen Fraktion und einer an Feststoffpartikeln reichen Fraktion, welche eine hohe Reinigungskapazität aufweist und bei der insbesondere der auf die projezierte Lamellenfläche und den Volumendurchsatz bezogene Reinigungsgrad gegenüber dem mit den aus dem Stand der Technik bekannten Flotationsvorrichtungen erzielbaren Reinigungsgrad erhöht ist.

Erfindungsgemäß wird diese Aufgabe gelöst durch eine Flotationsvorrichtung nach Patentanspruch 1 und insbesondere durch eine Flotationsvorrichtung zur Abtrennung von Feststoffpartikeln aus einer Suspension unter Bildung einer an Feststoffpartikeln armen Fraktion und einer an Feststoffpartikeln reichen Fraktion, welche einen Behälter mit einem Einlass für die Suspension, mit einem Auslass für die an Feststoffpartikeln arme Fraktion, mit einem Auslass für die an Feststoffpartikeln reiche Fraktion sowie mit wenigstens einem aus mehreren übereinander angeordneten Lamellen zusammengesetzten Lamellenblock umfasst, wobei der wenigstens eine Lamellenblock eine zu der Behälterwand orientierte Rückseite und eine auf der gegenüberliegenden Seite des Lamellenblocks angeordnete Vorderseite aufweist, und wobei an der Rückseite des wenigstens einen Lamellenblocks eine sich zumindest über einen Teil der Rückseite des Lamellenblocks erstreckende Platte angeordnet ist, wobei die Platte eine Vielzahl von Öffnungen aufweist, welche den Durchtritt von Flüssigkeit durch die Platte ermöglichen, wobei die Summe der Flächen der einzelnen Öffnungen in dem, bezogen auf die Vertikale, oberen Bereich der Platte pro Quadratzentimeter der Platte größer ist als die Summe der Flächen der einzelnen Öffnungen in dem unteren Bereich der Platte pro Quadratzentimeter der Platte.

Unter einer Vielzahl von Öffnungen werden im Sinne der vorliegenden Erfindung wenigstens zwei Öffnungen verstanden.

Überraschenderweise konnte im Rahmen der vorliegenden Erfindung herausgefunden werden, dass durch das Vorsehen einer eine Vielzahl von, d.h. wenigstens zwei Öffnungen aufweisenden Platte, welche nachfolgend auch als Lochplatte bezeichnet wird, bei der die Summe der Flächen der einzelnen Öffnungen in dem, bezogen auf die Vertikale, oberen Bereich der Platte pro Quadratzentimeter der Platte größer ist als die Summe der Flächen der einzelnen Öffnungen in dem unteren Bereich der Platte pro Quadratzentimeter der Platte, an der Rückseite des wenigstens einen Lamellenblocks über die Höhe des Flotationsbehälters ein gleichmäßiger Abzug von Klarwasser erreicht werden kann. Indem die Lochplatte in ihrem, bezogen auf die Vertikale bzw. die Behälterlängsachse (welche vorzugsweise vertikal ist), oberen Bereich eine größere Gesamtfläche der Öffnungen aufweist als in ihrem unteren Bereich wird zuverlässig gewährleistet, dass bei einem gleichen hydrostatischen Druck in dem oberen und in dem unteren Bereich des Flotationsbehälters ein größerer Flüssigkeitsstrom durch die oberen Lamellen als durch die unteren Lamellen geführt wird, so dass unter den realen Bedingungen beim Betrieb der Flotationsvorrichtung, bei dem der hydrostatische Druck in dem unteren Behälterbereich größer ist als in dem oberen Behälterbereich, der aufgrund des in dem unteren Bereich des Flotationsbehälters im Vergleich zu dem oberen Bereich des Flotationsbehälters höheren hydrostatischen Drucks resultierende größere Flüssigkeitsstrom durch die unteren Lammellen ausgeglichen wird, so dass im Ergebnis durch die oberen und die unteren Lamellen jeweils ein gleich großer Flüssigkeitsstrom strömt. Dadurch wird eine Vergleichmäßigung der spezifischen hydraulischen Belastung und daraus ein optimaler Reinigungsgrad pro projezierter Lamellenfläche erzielt. Mit anderen Worten kann durch das Vorsehen der Lochplatte erreicht werden, dass ungeachtet des höheren hydrostatischen Drucks in dem unteren Flotationsbehälterbereich durch die oberen Lamellen und die unteren Lamellen pro Zeiteinheit die gleiche Menge an Klarwasser abgezogen wird, so dass bei vorgegebener projezierter Lamellenfläche und vorgegebenem Volumendurchsatz ein höherer Reinigungsgrad erreicht wird. Mithin kann die maximale oder zumindest die nahezu maximale Reinigungskapazität des Flotationsbehälters ausgeschöpft werden.

Alternativ dazu kann die Lochplatte bzw. die wenigstens zwei Öffnungen aufweisende Platte an der Vorderseite des wenigstens einen Lamellenblocks angeordnet sein. Beispielsweise können in dem Behälter der Flotationsvorrichtung zwei hintereinander angeordnete Lamellenblöcke vorgesehen sein, wobei die Lochplatte zwischen den beiden Lamellenblöcken vorgesehen ist, so dass die Lochplatte an der Rückseite des ersten Lamellenblocks und an der Vorderseite des zweiten Lamellenblocks angeordnet ist.

Gemäß einer bevorzugten Ausführungsform der vorliegenden Erfindung beträgt die Summe der Flächen der einzelnen Öffnungen bezogen auf die Gesamtfläche der (Loch)platte 0,1 bis 20 %. Besonders gute Ergebnisse werden insbesondere erhalten, wenn die Summe der Flächen der einzelnen Öffnungen bezogen auf die Gesamtfläche der Platte 0,2 bis 10 % und besonders bevorzugt 0,4 bis 5 % beträgt. So kann ein guter Flüssigkeitsdurchfluss durch die Lochplatte erreicht werden.

Insbesondere wenn bei der Lochplatte die Summe der Flächen der einzelnen Öffnungen pro Quadratzentimeter der Platte, von der Vertikalen aus gesehen, von unten nach oben gradientenartig zunimmt, wobei vorzugsweise die Summe der Flächen der einzelnen Öffnungen pro Quadratzentimeter der Platte von unten nach oben umgekehrt proportional zu dem hydrostatischen Druck, welcher in dem jeweiligen Bereich des Behälters herrscht, zunimmt, wird ein nahezu gleich großer Flüssigkeitsstrom durch die oberen und die unteren Lamellen erreicht.

Um zu erreichen, dass die Summe der Flächen der einzelnen Öffnungen in dem oberen Bereich der Platte pro Quadratzentimeter der Platte größer ist als die Summe der Flächen der einzelnen Öffnungen in dem unteren Bereich der Platte pro Quadratzentimeter der Platte, wird gemäß einer weiteren bevorzugten Ausführungsform der vorliegenden Erfindung vorgeschlagen, dass die Platte eine Vielzahl von Öffnungen aufweist, wobei in dem oberen Bereich der Platte mehr Öffnungen pro Quadratzentimeter als in dem unteren Bereich der Platte vorgesehen sind. Vorzugsweise weisen die einzelnen Öffnungen bei dieser Ausführungsform jeweils eine gleich große Fläche oder zumindest eine im Wesentliche gleich große Fläche auf. Unter einer im Wesentlichen gleich großen Fläche wird im Sinne der vorliegenden Erfindung verstanden, dass jede Öffnung wenigstens 70 % der Fläche der größten Öffnung aufweist.

Alternativ zu der vorgenannten Ausführungsform ist es auch möglich, dass die Lochplatte eine Vielzahl von Öffnungen aufweist, wobei die Öffnungen in dem oberen Bereich der Platte jeweils eine größere Fläche als die einzelnen Öffnungen in dem unteren Bereich der Platte aufweisen. Bei dieser Ausführungsform ist es bevorzugt, dass in dem oberen Bereich der Platte 70 bis 130 Prozent so viele Öffnungen pro Quadratzentimeter, vorzugsweise 85 bis 115 Prozent so viele Öffnungen pro Quadratzentimeter und besonders bevorzugt etwa gleich viele Öffnungen pro Quadratzentimeter wie in dem unteren Bereich der Platte vorgesehen sind.

Selbstverständlich ist es auch möglich, die beiden vorgenannten Ausführungsformen zu kombinieren, also beispielsweise in dem oberen Bereich der Lochplatte kleinere, aber mehr Öffnungen vorzusehen als in dem unteren Bereich der Lochplatte oder in dem oberen Bereich der Lochplatte größere, aber weniger Öffnungen vorzusehen als in dem unteren Bereich der Lochplatte oder in dem oberen Bereich der Lochplatte größere und mehr Öffnungen vorzusehen als in dem unteren Bereich der Lochplatte, so lange die Summe der Flächen der einzelnen Öffnungen in dem oberen Bereich der Platte pro Quadratzentimeter der Platte größer ist als die Summe der Flächen der einzelnen Öffnungen in dem unteren Bereich der Platte pro Quadratzentimeter der Platte.

Grundsätzlich ist die vorliegende Erfindung nicht auf eine bestimmte Geometrie der einzelnen Lochplatten beschränkt. So können die einzelnen Öffnungen eine beliebige polygonale oder runde Geometrie aufweisen, wobei alle Öffnungen die gleiche oder jeweils unterschiedliche Geometrien aufweisen können. Gute Ergebnisse werden insbesondere erhalten, wenn die Öffnungen einen elliptischen, kreisrunden, rechteckigen oder quadratischen Querschnitt aufweisen.

Vorzugsweise ist die Lochplatte derart angeordnet ist, dass diese, bezogen auf die Vertikale bzw. die Behälterlängsachse, eine Neigung von 0 bis 45°, bevorzugt von 0 bis 22,5°, besonders bevorzugt von 0 bis 10 und ganz besonders bevorzugt von 0 bis 5° aufweist.

Auch die geometrische Form des Lamellenblocks ist bei der vorliegenden Erfindung nicht beschränkt. Zudem bezeichnet der Begriff Lamellenblock lediglich eine Ansammlung von wenigstens zwei Lamellen, ohne diese Ansammlung von Lammellen auf irgendeine geometrische Form festzulegen. Um ihre Trennaufgabe effizient zu erfüllen, sind die einzelnen Lamellen in dem Lamellenblock vorzugsweise im Wesentlichen parallel zueinander angeordnet.

Um eine gute Trenneffizienz bei möglichst kleiner Querschnittsfläche des Flotationsbehälters zu erreichen, wird in Weiterbildung des Erfindungsgedankens vorgeschlagen, die einzelnen Lamellen des wenigstens einen Lamellenblocks, bezogen auf den Querschnitt des Behälters bzw. bezogen auf die Horizontale schräg anzuordnen. Im Rahmen der vorliegenden Erfindung hat es sich insbesondere als vorteilhaft erwiesen, die einzelnen Lamellen des wenigstens einen Lamellenblocks zueinander parallel oder im Wesentlichen parallel zueinander und, bezogen auf den Querschnitt des Behälters, nach außen und, bezogen auf die Horizontale, nach unten, schräg anzuordnen.

Gute Ergebnisse werden insbesondere erhalten, wenn die einzelnen Lamellen des wenigstens einen Lamellenblocks, bezogen auf die Horizontale, eine Neigung von 5 bis 75°, bevorzugt von 10 bis 60° und ganz besonders bevorzugt von 30 bis 45° aufweisen.

Auch bezüglich der Geometrie der einzelnen Lamellen ist die vorliegende Erfindung nicht beschränkt. So ist es beispielsweise möglich, zumindest einen Teil der Lamellen als mehrlagige, vorzugsweise wabenartige Struktur mit zwei Außenlagen und dazwischen angeordneten Verbindungsstrukturen auszubilden, wobei zwischen den Außenlagen vorzugsweise durchgängige Strömungskanäle gebildet werden. Dadurch ergibt sich eine hohe Festigkeit der Lamellen.

Vorzugsweise ist der wenigstens eine Lamellenblock in der Form eines schrägen Quaders ausgebildet.

Auch bezüglich der geometrischen Form des Flotationsbehälters ist die vorliegende Erfindung nicht beschränkt. Beispielsweise kann der Behälter einen kreisförmigen, elliptischen oder polygonalen Querschnitt aufweisen. Vorzugsweise ist die Behälterlängsachse parallel zu der Vertikalen angeordnet.

Zu einem gewissen Anteil wird die Trennleistung der Flotationsvorrichtung zwischen Feststoffpartikeln und Flüssigkeit auch von dem in dem Behälter der Flotationsvorrichtung eingestellten Strömungsverhältnissen beeinflusst. Insbesondere sollte durch die eingestellten Strömungsverhältnisse sichergestellt werden, dass über den Querschnitt des Behälters der Flotationsvorrichtung eine gleichmäßige Zuführung an Suspension erfolgt.

Gemäß einer bevorzugten Ausführungsform der vorliegenden Erfindung ist der Einlass für die Suspension in dem unteren Bereich des Behälters angeordnet und derart ausgebildet, dass dieser eine, bezogen auf den Behälterquerschnitt, mittige, vertikal nach oben gerichtete Hauptströmung bewirkt. Bei dieser Ausführungsform sind in dem Behälter der Flotationsvorrichtung vorzugsweise zwei bis vier und besonders bevorzugt zwei Lamellenblöcke vorgesehen, welche ganz besonders bevorzugt gleichmäßig über den Querschnitt des Behälters verteilt sind und beispielsweise in der Form schräger Quader ausgebildet sind. Dadurch wird erreicht, dass durch jeden einzelnen Lamellenblock eine bezüglich deren Zusammensetzung, das heißt deren Anteil an Flüssigkeit und Feststoffpartikeln, gleiche Flüssigkeitszusammensetzung geführt wird. Zudem wird durch die Ausrichtung der Vertikalströmung nach radial oben und die durch die mittige Ausrichtung der Strömung bedingte Anordnung der Lamellen radial außerhalb der Hauptströmung erreicht, dass die Strömung der an Feststoffpartikeln armen Fraktion nach radial außen gerichtet ist und sich damit zunehmend verlangsamt, was eine besonders gute Abtrennung der Feststoffpartikel bewirkt.

Alternativ zu der vorgenannten Ausführungsform ist es gemäß einer weiteren bevorzugten Ausführungsform möglich, in dem Behälter der Flotationsvorrichtung einen Lamellenblock vorzusehen, welcher vorzugsweise in der Form eines schrägen Quaders ausgebildet ist und sich bevorzugt von der Behältermitte bis zu einem Abstand zu der Behälterwand erstreckt. Bei dieser Ausführungsform weist der Behälter der Flotationsvorrichtung vorzugsweise einen kreisförmigen Querschnitt auf und ist der Einlass für die Suspension bevorzugt in dem unteren Bereich des Behälters angeordnet und derart ausgebildet, dass dieser eine, bezogen auf den Behälterquerschnitt, hufeisenförmige, vertikal nach oben gerichtete Hauptströmung bewirkt. Bei dieser Ausführungsform wird zusätzliche freie Fläche für die Flotation gewonnen.

Um die Strömungsverhältnisse wie gewünscht einstellen zu können, wird in Weiterbildung des Erfindungsgedankens vorgeschlagen, dass der Einlass für die Suspension eine Zufuhrleitung und ein Ablenkmittel umfasst, welches haubenförmig ausgestaltet ist, wobei der, bezogen auf die Vertikale, obere Bereich der Haube geschlossen und der untere Bereich und der seitliche Bereich der Haube offen sind. Bei dieser Ausführungsform ist das Ablenkmittel vorzugsweise senkrecht zu der Behälterlängsachse angeordnet. Durch das Vorsehen des Ablenkmittels kann sichergestellt werden, dass über den Querschnitt des Behälters der Flotationsvorrichtung eine gleichmäßige Zuführung an Suspension erfolgt.

Um in dem Behälter der Flotationsvorrichtung eine Durchmischung der durch die Lamellen geführten und gereinigten Flüssigkeit mit nicht gereinigter Suspension zu vermeiden, ist vorzugsweise hinter der an der Rückseite des wenigstens einen Lamellenblocks angeordneten Platte ein Sammelkanal für die an Feststoffpartikeln arme Fraktion vorgesehen, welcher von dem übrigen Teil des Behälters räumlich getrennt ist.

Gemäß einer weiteren bevorzugten Ausführungsform der vorliegenden Erfindung ist es bevorzugt, in dem Bereich des Einlasses für die Suspension eine Zuführung für chemische Zusatzstoffe vorzusehen. Mithilfe dieser Zuführung können in die in dem Behälter der Flotationsvorrichtung befindliche Suspension geeignete chemische Zusatzstoffe eingebracht werden, um die Flotation zu optimieren.

Um den sich in dem oberen Bereich des Behälters der Flotationsvorrichtung ansammelnden festoffhaltigen Schlamm abschöpfen zu können, wird in Weiterbildung des Erfindungsgedankens vorgeschlagen, in dem Behälter eine Abschöpfeinrichtung als Schlammräumer vorzusehen.

Ein weiterer Gegenstand der vorliegenden Erfindung ist ein Verfahren zur Abtrennung von Feststoffpartikeln aus einer Suspension unter Bildung einer an Feststoffpartikeln armen Fraktion und einer an Feststoffpartikeln reichen Fraktion, welches in einer zuvor beschriebenen erfindungsgemäßen Flotationsvorrichtung durchgeführt wird.

Nachfolgend wird die vorliegende Erfindung rein beispielhaft anhand vorteilhafter Ausführungsformen und unter Bezugnahme auf die beigefügten Zeichnungen beschrieben.

Dabei zeigen:
- Fig. 1: eine Längsschnittansicht einer Flotationsvorrichtung gemäß einer ersten Ausführungsform der vorliegenden Erfindung,
- Fig. 2: einen Querschnitt der in der Fig. 1 dargestellten Flotationsvorrichtung,
- Fig. 3: einen Querschnitt einer Flotationsvorrichtung gemäß einer zweiten Ausführungsform der vorliegenden Erfindung,
- Fig. 4: eine schematische Ansicht einer in der Flotationsvorrichtung gemäß der vorliegenden Erfindung einsetzbaren Lochplatte gemäß eines ersten Ausführungsbeispiels und
- Fig. 5: eine schematische Ansicht einer in der Flotationsvorrichtung gemäß der vorliegenden Erfindung einsetzbaren Lochplatte gemäß eines zweiten Ausführungsbeispiels.

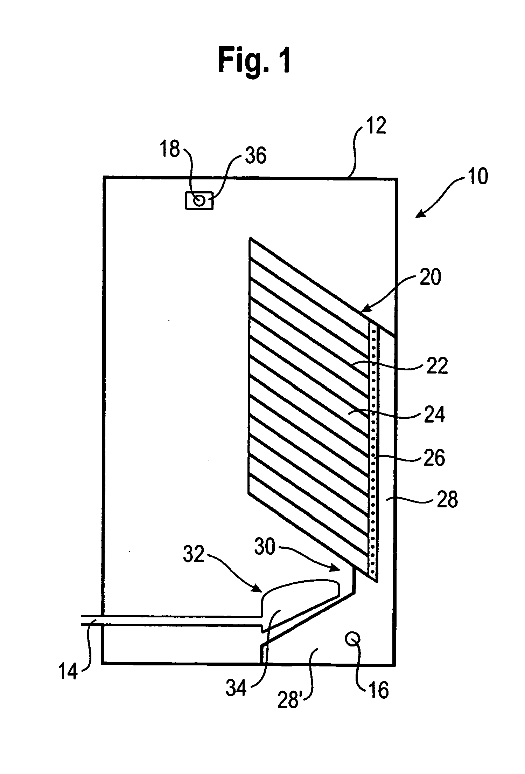

Die in der Fig. 1 dargestellte Flotationsvorrichtung 10 zur Abtrennung von Feststoffpartikeln aus einer Suspension unter Bildung einer an Feststoffpartikeln armen Fraktion und einer an Feststoffpartikeln reichen Fraktion umfasst einen Behälter 12, welcher zylinderförmig ausgestaltet ist und vertikal angeordnet ist. Der Behälter 12 weist einen Einlass für eine Suspension 14, einen Auslass für die an Feststoffpartikeln arme Fraktion 16, einen Auslass für die an Feststoffpartikeln reiche Fraktion 18 sowie einen Lamellenblock 20 auf.

Der Lamellenblock 20 ist aus mehreren einzelnen Lamellen 22 zusammengesetzt, welche parallel zueinander in Form eines Stapels angeordnet sind. Die Abstände zwischen den einzelnen Lamellen 22 untereinander sind vorzugsweise gleich groß, so dass sich zwischen den einzelnen Lamellen 22 gleich große Kanäle 24 ausbilden. Die einzelnen Lamellen 22 sind gegenüber der Horizontalen und von der Mitte des Behälters 12 zu der Wand des Behälters 12 aus betrachtet schräg nach unten ausgerichtet. Insgesamt weist der Lamellenblock 20 die Form eines schrägen Quaders auf, welcher sich im Längsschnitt des Behälters 12 in etwa von der Mitte des Behälters bis zu einem Abstand von der Wand des Behälters 12 erstreckt.

An der der Wand des Behälters 12 zugewandten Seite des Lamellenblocks 20, d.h. an der Rückseite des Lamellenblocks 20, ist eine Lochplatte 26 befestigt, welche sich über die gesamte Fläche der Rückwand des Lamellenblocks 20 erstreckt und welche vertikal, d.h. parallel zu der Behälterlängsachse, angeordnet ist. Die Lochplatte 26 weist einzelne Öffnungen auf, welche in der Fig. 1 stark schematisch angedeutet sind, durch welche Flüssigkeit durch die Lochplatte 26 durchtreten kann.

Zwischen der Lochplatte 26 und der Wand des Behälters 12 ist im Bereich des Lamellenblocks 20 ein Sammelkanal 28 vorgesehen, welcher räumlich von dem übrigen Teil des Behälters getrennt ist, so dass keine Flüssigkeit von dem übrigen Teil des Behälters 12 in den Sammelkanal 28 und keine Flüssigkeit von dem Sammelkanal 28 in den übrigen Teil des Behälters 12 übertreten kann. In dem unteren Bereich des Sammelkanals 28' ist ein Auslass 16 für die an Feststoffpartikeln arme Fraktion vorgesehen, über den die durch die Lamellen geführte und gereinigte Flüssigkeit bzw. Klarwasser aus dem Behälter 12 abgezogen werden kann. Der untere Bereich des Sammelkanals 28' ist so ausgebildet, dass sich zwischen dessen oberen Begrenzung und der unteren Begrenzung des Lamellenblocks 20 ein in etwa V-förmiger Bereich 30 ausbildet.

Oberhalb der oberen Begrenzung des unteren Bereichs des Sammelkanals 28' ist ein Zulaufverteiler 32 vorgesehen, welcher einen Einlass 14 für die Suspension sowie ein Ablenkmittel 34 umfasst. Das Ablenkmittel 34 ist haubenförmig ausgebildet und an seiner Unterseite sowie seitlich offen.

Schließlich weist der Behälter 12 der Flotationsvorrichtung 10 eine (schematisch dargestellte) Abschöpfeinrichtung 36 als Schlammräumer auf, welche wiederum einen Auslass 18 für die an Feststoffpartikeln reiche Fraktion aufweist.

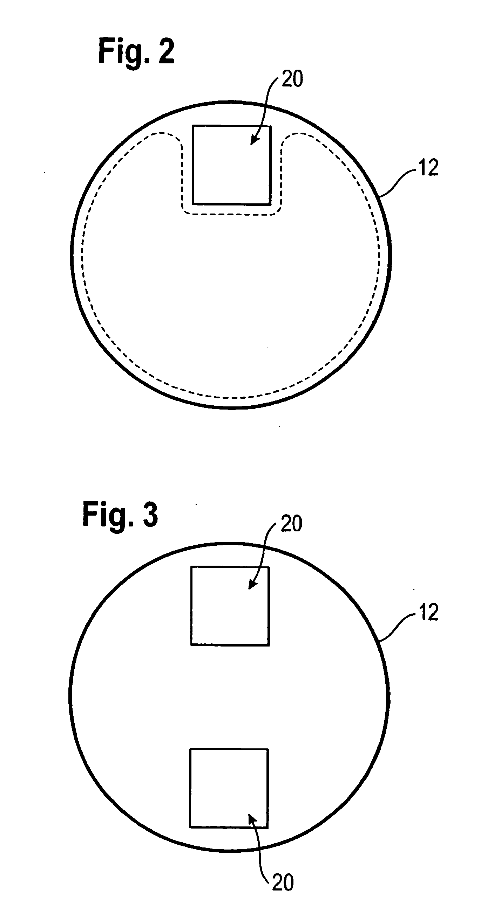

Wie in der Fig. 2 dargestellt, ist der Lamellenblock 20 bei der in der Fig. 1 dargestellten Ausführungsform mit seiner Rückwand nahe der Wand des Behälters 12 angeordnet und erstreckt sich bis in die Nähe der Mitte des Behälters 12. Aufgrund der im Querschnitt rechteckigen Form des Lamellenblocks 20 ergibt sich somit im Querschnitt des Behälters ein hufeisenförmiger, in der Fig. 2 durch die gestrichelte Linie angedeuteter Bereich, in dem keine Lamellen vorhanden sind.

Im Unterschied zu der in der Fig. 1 dargestellten Ausführungsform weist der Behälter 12 der in der Fig. 3 dargestellten Ausführungsform zwei Lamellenblöcke 20 auf, welche jeweils die Form eines schrägen Quaders aufweisen. Beide Lamellenblöcke 20 sind jeweils mit ihrer Rückseite nahe der Wand des Behälters 12 angeordnet und erstrecken sich bis zu einem Abstand von der Mitte des Behälters 12, wobei beide Lamellenblöcke 20, bezogen auf die Behälterlängsachse, punktsymmetrisch angeordnet sind.

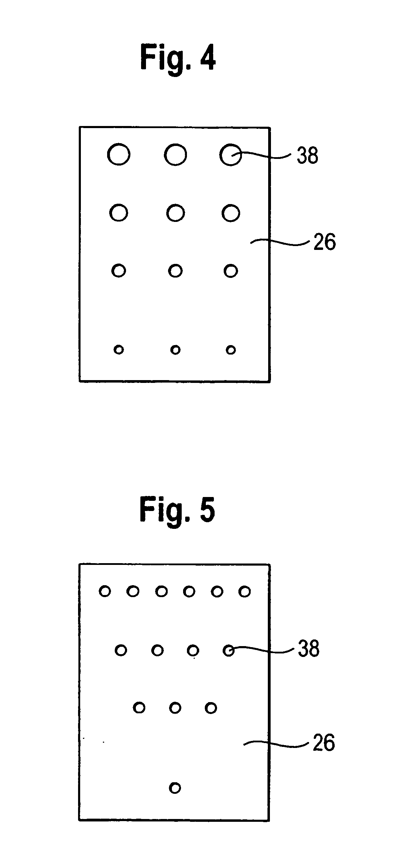

Wie in den Fig. 4 und 5 dargestellt weist die an der Rückseite des Lamellenblocks 20 angebrachte Lochplatte mehrere Öffnungen bzw. Löcher 38 auf, wobei die Summe der Flächen der einzelnen Öffnungen 38 in dem oberen Bereich der Platte pro Quadratzentimeter der Platte größer ist als die Summe der Flächen der einzelnen Öffnungen 38 in dem unteren Bereich der Platte pro Quadratzentimeter der Platte.

Dies wird in dem Fall der in der Fig. 4 dargestellten Lochplatte 26 dadurch erreicht, dass sich die Fläche der einzelnen Öffnungen 38 von dem unteren Ende der Platte 26 bis zu dem oberen Ende der Platte 26 sukzessive vergrößert, wobei die Anzahl der Öffnungen pro Quadratzentimeter in dem unteren und in dem oberen Bereich der Lochplatte 26 jeweils gleich sind. Im Unterschied dazu wird dies in dem Fall der in der Fig. 5 dargestellten Lochplatte 26 dadurch erreicht, dass die Anzahl der pro Quadratzentimeter vorgesehenen Öffnungen 38 von dem unteren Bereich der Lochplatte 26 bis zu dem oberen Bereich der Lochplatte 26 sukzessive zunimmt, wobei die Fläche der einzelnen Öffnungen 38 jeweils gleich groß ist.

### Bezugszeichenliste

- 10: Flotationsvorrichtung
- 12: Behälter
- 14: Einlass (Zufuhrleitung) für Suspension
- 16: Auslass für die an Feststoffpartikeln arme Fraktion
- 18: Auslass für die an Feststoffpartikeln reiche Fraktion
- 20: Lamellenblock
- 22: Lamelle
- 24: Kanal
- 26: Lochplatte
- 28: Sammelkanal
- 28': unterer Bereich des Sammelkanals
- 30: V-förmiger Bereich
- 32: Zulaufverteiler
- 34: Ablenkmittel
- 36: Abschöpfeinrichtung
- 38: Öffnungen bzw. Löcher

## Patentansprüche

1. Flotationsvorrichtung (10) zur Abtrennung von Feststoffpartikeln aus einer Suspension unter Bildung einer an Feststoffpartikeln armen Fraktion und einer an Feststoffpartikeln reichen Fraktion umfassend einen Behälter (12) mit wenigstens einem aus mehreren übereinander angeordneten Lamellen (22) zusammengesetzten Lamellenblock (20), mit einem Einlass (14) für die Suspension, mit einem Auslass (16) für die durch die Lamellen geführte an Feststoffpartikeln arme Fraktion sowie mit einer Abschöpfeinrichtung (36) als Schlammräumer, welche einen Auslass (18) für die an Feststoffpartikeln reiche Fraktion aufweist, wobei an einer zu der Behälterwand orientierten Seite des wenigstens einen Lamellenblocks (20) eine sich zumindest über einen Teil der Seite des Lamellenblocks (20) erstreckende Platte (26) angeordnet ist, wobei die Platte (26) eine Vielzahl von Öffnungen (38) aufweist, welche den Durchtritt von Flüssigkeit durch die Platte (26) ermöglichen, wobei die Summe der Flächen der einzelnen Öffnungen (38) in dem, bezogen auf die Vertikale, oberen Bereich der Platte (26) pro Quadratzentimeter der Platte (26) größer ist als die Summe der Flächen der einzelnen Öffnungen (38) in dem unteren Bereich der Platte (26) pro Quadratzentimeter der Platte (26), **dadurch gekennzeichnet dass** der Einlass (14) für die Suspension im unteren Bereich des Behälters (12) angeordnet ist und derart ausgebildet ist, dass dieser eine, bezogen auf den Behälterquerschnitt, mittige, vertikal nach oben gerichtete Hauptströmung bewirkt.

2. Flotationsvorrichtung (10) nach Anspruch 1,
**dadurch gekennzeichnet, dass**
die Summe der Flächen der einzelnen Öffnungen (38) bezogen auf die Gesamtfläche der Platte (26) 0,1 bis 20 % beträgt.

3. Flotationsvorrichtung (10) nach Anspruch 1,
**dadurch gekennzeichnet, dass**
die Summe der Flächen der einzelnen Öffnungen (38) pro Quadratzentimeter der Platte (26), bezogen auf die Vertikale, von unten nach oben gradientenartig zunimmt, wobei die Summe der Flächen der einzelnen Öffnungen (38) pro Quadratzentimeter der Platte (26) von unten nach oben umgekehrt proportional zu dem hydrostatischen Druck, welcher in dem jeweiligen Bereich des Behälters (12) herrscht, zunimmt.

4. Flotationsvorrichtung (10) nach zumindest einem der vorstehenden Ansprüche,
**dadurch gekennzeichnet, dass**
in dem oberen Bereich der Platte (26) mehr Öffnungen (38) pro Quadratzentimeter als in dem unteren Bereich der Platte (26) vorgesehen sind.

5. Flotationsvorrichtung (10) nach Anspruch 4,
**dadurch gekennzeichnet, dass**
die einzelnen Öffnungen (38) jeweils eine gleich große Fläche aufweisen oder jede Öffnung (38) wenigstens 70 % der Fläche der größten Öffnung (38) aufweist.

6. Flotationsvorrichtung (10) nach einem der Ansprüche 1 bis 3,
**dadurch gekennzeichnet, dass**
die Öffnungen (38) in dem oberen Bereich der Platte (26) jeweils eine größere Fläche als die einzelnen Öffnungen (38) in dem unteren Bereich der Platte (26) aufweisen, wobei vorzugsweise in dem oberen Bereich der Platte (26) 70 bis 130 Prozent so viele Öffnungen (38) pro Quadratzentimeter wie in dem unteren Bereich der Platte (26) vorgesehen sind.

7. Flotationsvorrichtung (10) nach zumindest einem der vorstehenden Ansprüche,
**dadurch gekennzeichnet, dass**
die Lochplatte derart angeordnet ist, dass diese, bezogen auf die Vertikale, eine Neigung von 0 bis 45° aufweist.

8. Flotationsvorrichtung (10) nach zumindest einem der vorstehenden Ansprüche,
**dadurch gekennzeichnet, dass**
die einzelnen Lamellen (22) des wenigstens einen Lamellenblocks (20) zueinander im Wesentlichen parallel angeordnet sind.

9. Flotationsvorrichtung (10) nach zumindest einem der vorstehenden Ansprüche,
**dadurch gekennzeichnet, dass**
die einzelnen Lamellen (22) des wenigstens einen Lamellenblocks (20), bezogen auf den Querschnitt des Behälters (12), nach außen und, bezogen auf die Horizontale, nach unten, schräg angeordnet sind, wobei vorzugsweise die einzelnen Lamellen (22) des wenigstens einen Lamellenblocks (20), bezogen auf die Horizontale, eine Neigung von 5 bis 75° aufweisen.

10. Flotationsvorrichtung (10) nach zumindest einem der vorstehenden Ansprüche,
**dadurch gekennzeichnet, dass**
zumindest ein Teil der Lamellen (22) als wabenartige Struktur ausgebildet ist.

11. Flotationsvorrichtung (10) nach zumindest einem der vorstehenden Ansprüche,
**dadurch gekennzeichnet, dass**
der wenigstens eine Lamellenblock (20) in der Form eines schrägen Quaders ausgebildet ist.

12. Flotationsvorrichtung (10) nach Anspruch 1,
**dadurch gekennzeichnet, dass**
diese zwei bis vier Lamellenblöcke (20) aufweist, welche gleichmäßig über den Querschnitt des Behälters (12) verteilt sind und welche jeweils in der Form eines schrägen Quaders ausgebildet sind.

13. Flotationsvorrichtung (10) nach einem der Ansprüche 1 bis 11,
**dadurch gekennzeichnet, dass**
diese einen Lamellenblock (20) aufweist, welcher in der Form eines schrägen Quaders ausgebildet ist und sich von der Behältermitte bis zu einem Abstand zu der Behälterwand erstreckt, wobei der Behälter (12) vorzugsweise einen kreisförmigen Querschnitt aufweist.

14. Flotationsvorrichtung (10) nach zumindest einem der vorstehenden Ansprüche,
**dadurch gekennzeichnet, dass**
der Einlass (14) für die Suspension eine Zufuhrleitung (14) und ein Ablenkmittel (34) umfasst, welches haubenförmig ausgestaltet ist, wobei der, bezogen auf die Vertikale, obere Bereich der Haube geschlossen und der untere Bereich und der seitliche Bereich der Haube offen sind, wobei das Ablenkmittel (34) senkrecht zu der Behälterlängsachse angeordnet ist.

15. Verfahren zur Abtrennung von Feststoffpartikeln aus einer Suspension unter Bildung einer an Feststoffpartikeln armen Fraktion und einer an Feststoffpartikeln reichen Fraktion,
**dadurch gekennzeichnet, dass**
dieses in einer Flotationsvorrichtung (10) nach einem der Ansprüche 1 bis 14 durchgeführt wird.

## Claims

1. A flotation apparatus (10) for the separation of solid particles from a suspension while forming a fraction low in solid particles and a fraction rich in solid particles, the apparatus comprising a container (12) having at least one block of slats (20) assembled from a plurality of slats (22) arranged above one another, having an inlet (14) for the suspension, an outlet (16) for the fraction low in solid particles led through the slats, as well as having a skimming device (36) as a sludge scraper which has an outlet (18) for the fraction rich in solid particles, wherein a plate (26) extending over at least a part of the side of the block of slats (20) is arranged at a side of the at least one block of slats (20) oriented toward the container wall, with the plate (26) having a plurality of openings (38) which enable the passage of liquid through the plate (26), with the sum of the areas of the individual openings (38) in the upper region of the plate (26), with regard to the vertical direction, per square centimetre of the plate (26) being larger than the sum of the areas of the individual openings (38) in the lower region of the plate (26) per square centimetre of the plate (26),
**characterized in that**
the inlet (14) for the suspension is arranged in the lower region of the container (12) and is designed so that it brings about a central, vertically upwardly directed main flow with regard to the container cross-section.

2. A flotation apparatus (10) in accordance with claim 1,
**characterized in that**
the sum of the areas of the individual openings (38) with regard to the total area of the plate (26) amounts to 0.1 to 20%.

3. A flotation apparatus (10) in accordance with claim 1,
**characterized in that**
the sum of the areas of the individual openings (38) per square centimetre of the plate (26), with regard to the vertical, increases from the bottom to the top in the manner of a gradient, with the sum of the areas of the individual openings (38) per square centimetre of the plate (26) increasing from the bottom to the top inversely proportionally to the hydrostatic pressure which prevails in the respective region of the container (12).

4. A flotation apparatus (10) in accordance with at least one of the preceding claims,
**characterized in that**
more openings (38) per square centimetre are provided in the upper region of the plate (26) than in the lower region of the plate (26).

5. A flotation apparatus (10) in accordance with claim 4,
**characterized in that**
the individual openings (38) each have an area of the same size or each opening (38) has at least 70 % of the area of the largest opening (38).

6. A flotation apparatus (10) in accordance with any one of the claims 1 to 3,
**characterized in that**
the openings (38) in the upper region of the plate (26) each have a larger area than the individual openings (38) in the lower region of the plate (26), with preferably 70 to 130 percent as many openings (38) per square being provided in the upper region of the plate (26) as in the lower region of the plate (26).

7. A flotation apparatus (10) in accordance with at least one of the preceding claims,
**characterized in that**
the apertured plate is arranged such that it has an inclination with regard to the vertical of 0 to 45°.

8. A flotation apparatus (10) in accordance with at least one of the preceding claims,
**characterized in that**
the individual slats (22) of the at least one block of slats (20) are arranged substantially parallel to one another.

9. A flotation apparatus (10) in accordance with at least one of the preceding claims,
**characterized in that**
the individual slats (22) of the at least one block of slats (20) are obliquely arranged outwardly relative to the cross-section of the container (12) and downwardly relative to the horizontal, with preferably the individual slats (22) of the at least one block of slats (20) having an inclination with regard to the horizontal of 5 to 75°.

10. A flotation apparatus (10) in accordance with at least one of the preceding claims,
**characterized in that**
at least some of the slats (22) have a comb-like structure.

11. A flotation apparatus (10) in accordance with at least one of the preceding claims,
**characterized in that**
the at least one block of slats (20) is present in the form of an oblique parallelepiped.

12. A flotation apparatus (10) in accordance with claim 1,
**characterized in that**
it has two to four blocks of slats (20) which are uniformly distributed over the cross-section of the container (12) and which are each made in the form of an oblique parallelepiped.

13. A flotation apparatus (10) in accordance with any one of the claims 1 to 11,
**characterized in that**
it has a block of slats (20) which is made in the form of an oblique parallelepiped and which extends from the centre of the container up to a spacing from the container wall, with the container (12) preferably having a circular cross-section.

14. A flotation apparatus (10) in accordance with at least one of the preceding claims,
**characterized in that**
the inlet (14) for the suspension includes a feed line (14) and a deflection means (34) which is of hood-like shape with the upper region of the hood being closed relative to the vertical and the lower region and the side region of the hood being open, with the deflection means (34) being arranged perpendicular to the longitudinal axis of the container.

15. A method for the separation of solid particles from a suspension while forming a fraction low in solid particles and a fraction rich in solid particles,
**characterized in that**
this is carried out in a flotation apparatus (10) in accordance with any one of the claims 1 to 14.

## Revendications

1. Dispositif de flottation (10) pour la séparation de particules solides hors d'une suspension en formant une fraction pauvre en particules solides et une fraction riche en particules solides, comprenant un récipient (12) avec au moins un bloc de lamelles (20) composé de plusieurs lamelles (22) agencées les unes au-dessus des autres, comportant une entrée (14) pour la suspension, une sortie (16) pour la fraction pauvre en particules solides passée à travers les lamelles, ainsi qu'un moyen d'enlèvement (36) à titre d'évacuation de boues, qui comporte une sortie (18) pour la fraction riche en particules solides, dans lequel une plaque (26) s'étendant au moins sur une partie du côté du bloc de lamelles (20) est agencée sur un côté, orienté vers la paroi du récipient, dudit au moins un bloc de lamelles (20), ladite plaque (26) présentant une pluralité d'ouvertures (38) qui permettent la traversée de liquides à travers la plaque (26), de sorte que la somme des surfaces des ouvertures individuelles (38) dans la région supérieure de la plaque (26), par référence à la verticale, par centimètre carré de la plaque (26) est supérieure à la somme des surfaces des ouvertures individuelles (38) dans la région inférieure de la plaque (26) par centimètre carré de la plaque (26),
**caractérisé en ce que** l'entrée (14) pour la suspension est agencée dans la région inférieure du récipient (12) et est réalisée de telle manière que celle-ci provoque un écoulement principal dirigé verticalement vers le haut et central par référence à la section transversale du récipient.

2. Dispositif de flottation (10) selon la revendication 1,
**caractérisé en ce que** la somme des surfaces des ouvertures individuelles (38) s'élève de 0,1 à 20 % par référence à la surface totale de la plaque (26).

3. Dispositif de flottation (10) selon la revendication 1,
**caractérisé en ce que** la somme des surfaces des ouvertures individuelles (38) par centimètre carré de la plaque (26) augmente à la manière d'un gradient du bas vers le haut, par référence à la verticale, et la somme des surfaces des ouvertures individuelles (38) par centimètre carré de la plaque (26) augmente du bas vers le haut de façon inversement proportionnelle à la pression hydrostatique qui règne dans la région respective du récipient (12).

4. Dispositif de flottation (10) selon l'une au moins des revendications précédentes,
**caractérisé en ce que** dans la région supérieure de la plaque (26) il est prévu plus ouvertures (38) par centimètre carré que dans la région inférieure de la plaque (26).

5. Dispositif de flottation (10) selon la revendication 4,
**caractérisé en ce que** les ouvertures individuelles (38) présentent chacune une surface de même taille, ou bien **en ce que** chaque ouverture (38) présente au moins 70 % de la surface de la plus grande ouverture (38).

6. Dispositif de flottation (10) selon l'une des revendications 1 à 3,
**caractérisé en ce que** les ouvertures (38) dans la région supérieure de la plaque (26) présentent chacune une surface plus grande que les ouvertures individuelles (38) dans la région inférieure de la plaque (26), et **en ce qu'**il est de préférence prévu dans la région supérieure de la plaque (26) un nombre d'ouvertures (38) par centimètre carré qui est de 70 à 130 % de celui dans la région inférieure de la plaque (26).

7. Dispositif de flottation (10) selon l'une au moins des revendications précédentes,
**caractérisé en ce que** la plaque à trous est agencée de telle façon que celle-ci présente par rapport à la verticale une inclinaison de 0 à 45°.

8. Dispositif de flottation (10) selon l'une au moins des revendications précédentes,
**caractérisé en ce que** les lamelles individuelles (22) dudit au moins un bloc de lamelles (20) sont agencées essentiellement parallèles les unes aux autres.

9. Dispositif de flottation (10) selon l'une au moins des revendications précédentes,
**caractérisé en ce que** les lamelles individuelles (22) dudit au moins un bloc de lamelles (20) sont agencées en oblique vers l'extérieur par référence à la section du récipient (12) et vers le bas par référence à l'horizontale, et les lamelles individuelles (22) dudit au moins un bloc de lamelles (20) présentent de préférence une inclinaison de 5 à 75° par référence à l'horizontale.

10. Dispositif de flottation (10) selon l'une au moins des revendications précédentes,
**caractérisé en ce qu'**au moins une partie des lamelles (22) est réalisée comme une structure en nid d'abeilles.

11. Dispositif de flottation (10) selon l'une au moins des revendications précédentes,
**caractérisé en ce que** ledit au moins un bloc de lamelles (20) est réalisé sous la forme d'un parallélépipède oblique.

12. Dispositif de flottation (10) selon la revendication 1,
**caractérisé en ce que** celui-ci comprend de deux à quatre blocs de lamelles (20), qui seront répartis régulièrement sur la section du récipient (12) et qui sont chacun réalisés sous la forme d'un parallélépipède oblique.

13. Dispositif de flottation (10) selon l'une des revendications 1 à 11,
**caractérisé en ce qu'**il comprend un bloc de lamelles (20) qui est réalisé sous la forme d'un parallélépipède oblique et qui s'étend depuis le milieu de récipient jusqu'à une distance de la paroi du récipient, le récipient (12) ayant de préférence une section de forme circulaire.

14. Dispositif de flottation (10) selon l'une au moins des revendications précédentes,
**caractérisé en ce que** l'entrée (14) pour la suspension comprend une conduite d'amenée (14) et un organe de déviation (34), lequel est réalisé à la manière d'un capot, et la région supérieure, par référence à la verticale, du capot est fermée, et la région inférieure et la région latérale du capot sont ouvertes, et l'organe de déviation (34) est agencé perpendiculairement à l'axe longitudinal du récipient.

15. Procédé pour séparer des particules solides hors d'une suspension en formant une fraction pauvre en particules solides et une fraction riche en particules solides,
**caractérisé en ce que** celui-ci est mis en oeuvre dans un dispositif de flottation (10) selon l'une des revendications 1 à 14.
